# EUROPÄISCHE PATENTANMELDUNG

(11) **EP 4 488 110 A1**
(43) Veröffentlichungstag der Anmeldung: **08.01.2025**
(21) Anmeldenummer: 24181699.0
(22) Anmeldetag: 12.06.2024
(51) Int. Cl.: B60N 2/01, B60N 2/14, B60N 2/24, B60N 2/809, B60N 3/00, B60N 2/90

(54) **FREIZEITFAHRZEUG, INSBESONDERE WOHNMOBIL, MIT ZUMINDEST EINER BEFESTIGUNGSEINRICHTUNG**

(30) Priorität: 01.07.2023 DE 102023117420
(71) Anmelder: Erwin Hymer Group SE, 88339 Bad Waldsee (DE)
(72) Erfinder: Metzler, Marcus, 88339 Bad Waldsee (DE); Buck, Rainer, 88239 Wangen (DE); Dorn, Günter, 88239 Schlier (DE); Bopp, Sebastian, 72820 72820 (DE)
(74) Vertreter: Müller Schupfner & Partner Patent- und Rechtsanwaltspartnerschaft mbB (Muc)

(57) **Zusammenfassung**

Freizeitfahrzeug (2), insbesondere Wohnmobil, mit zumindest einer Sitzeinrichtung (1), wobei die zumindest eine Sitzeinrichtung (1) zumindest eine Lehne (6) und zumindest eine Kopfstütze (9) aufweist, wobei die Kopfstütze (9) Stangen (10, 11) aufweist, die in Führungen (12, 13) der Lehne (6) einführbar sind. Vorgeschlagen wird, dass zumindest eine Befestigungseinrichtung (3) vorgesehen ist, die zur Befestigung einer Einrichtung (20) an der Sitzeinrichtung (1) dient, dass die Befestigungseinrichtung (3) zumindest mittelbar an den Führungen (12, 13) der Lehne (6) befestigbar ist und dass die Befestigungseinrichtung (3) einen Grundkörper (21) aufweist, an dem eine Anbindung (22) für die Einrichtung (20) vorgesehen ist.

## Beschreibung

Die Erfindung betrifft ein Freizeitfahrzeug, insbesondere Wohnmobil, mit zumindest einer Befestigungseinrichtung. Speziell betrifft die Erfindung das Gebiet der Freizeitfahrzeuge, bei denen der Fahrersitz und der Beifahrersitz für einen Aufenthalt auf beispielsweise einem Campingplatz jeweils um zumindest 180° gedreht werden können, um eine Nutzung zu Wohnzwecken zu ermöglichen.

Aus der EP 0 844 135 A2 ist ein Wohnmobil bekannt. Vordersitze des Wohnmobils sind drehbar ausgebildet, so dass die Sitzposition nicht nur nach vorne zur Windschutzscheibe gerichtet ist, sondern auch nach rückwärts und teilweise sogar schräg nach hinten weisen kann. Außerdem ist eine Sitzgruppe vorhanden, die aus einem Einzelsitz und einer Sitzbank besteht. Im Raum zwischen all diesen Sitzen ist ein Tisch am Boden befestigt, der aus einem Einsäulen-Gestell und einer exzentrisch darauf drehbar gelagerten Tischplatte besteht. Die drehbare Tischplatte soll dabei in unterschiedlichen Drehpositionen arretierbar sein. Ferner ist ein Hubbett von einer seitlich oder nach oben weggeschwenkten Nichtgebrauchsstellung über die Vordersitze schwenkbar.

Das aus der EP 0 844 135 A2 bekannte Wohnmobil hat den Nachteil, dass der Platzbedarf für die Anordnung aus den Sitzen und dem Tisch im Grundriss betrachtet groß ist. Dadurch ist der restliche Platz beschränkt, der insbesondere für Schlafzwecke genutzt werden kann. Ferner benötigt das über einem Vordersitz angeordnete Hubbett als zusätzliche Einrichtung Stauplatz hinter der Anordnung, wenn die Anordnung aus den Sitzen genutzt werden soll und damit das Hubbett zum Schlafen genutzt werden kann.

Aufgabe der Erfindung ist es, ein Freizeitfahrzeug, insbesondere ein Wohnmobil, anzugeben, das einen verbesserten Aufbau aufweist und eine verbesserte Funktionsweise ermöglicht.

Die Aufgabe wird durch ein Freizeitfahrzeug mit den Merkmalen des unabhängigen Patentanspruchs 1 gelöst. Vorteilhafte Weiterbildungen der Erfindung sind in den Unteransprüchen angegeben.

Die Aufgabe wird durch ein Freizeitfahrzeug, insbesondere ein Wohnmobil, mit zumindest einer Sitzeinrichtung gelöst, wobei die zumindest eine Sitzeinrichtung zumindest eine Lehne und zumindest eine Kopfstütze aufweist, wobei die Kopfstütze Stangen aufweist, die in Führungen der Lehne einführbar sind, wobei zumindest eine Befestigungseinrichtung vorgesehen ist, die zur Befestigung einer Einrichtung an der Sitzeinrichtung dient, wobei die Befestigungseinrichtung zumindest mittelbar an den Führungen der Lehne befestigbar ist und wobei die Befestigungseinrichtung einen Grundkörper aufweist, an dem eine Anbindung für die Einrichtung vorgesehen ist.

Vorteilhaft ist es, dass die Anbindung zumindest ein Zugmittel aufweist, wobei die Einrichtung mittels des zumindest einen Zugmittels an den Grundkörper hängbar ist. Hierdurch kann eine Ausgestaltung realisiert werden, die sich innerhalb gewisser Grenzen an unterschiedliche Abmessung anpassen kann. Insbesondere wird ein Toleranzausgleich in einfacher Weise ermöglicht.

Vorteilhaft ist es, dass die Anbindung zumindest eine an dem Grundkörper ausgestaltete Stützfläche aufweist, an der die Einrichtung abstützbar ist. Hierdurch kann eine hohe Stabilität realisiert werden. Es kann eine Anhebung der Einrichtung über die Höhe der Lehne hinaus erfolgen.

Vorteilhaft ist es, dass der Grundkörper Durchgangsöffnungen aufweist, durch die die Stangen der Kopfstütze führbar sind, und dass im montierten Zustand der Befestigungseinrichtung der Grundkörper mittels der in die Führungen der Lehne eingeführten Stangen der Kopfstütze oder von der Kopfstütze unabhängiger Stangen an den Führungen der Lehne befestigt ist. Hierdurch ist eine stabile Befestigung möglich.

Vorteilhaft ist es, dass die von der Kopfstütze unabhängigen Stangen mit dem Grundkörper verbunden sind, wobei die Stangen in die Führungen der Lehne einführbar sind. Hierdurch ergibt sich eine Erhöhung der Stabilität. Insbesondere kann die Verbindung der Stangen mit dem Grundkörper eine höhere Steifigkeit der Gesamtanordnung ermöglichen.

Vorteilhaft ist es, dass zumindest zwei Lehnen nebeneinander angeordnet sind und dass zumindest zwei Befestigungseinrichtungen vorgesehen sind, die zur Befestigung der Einrichtung an der Sitzeinrichtung dienen, dass die Befestigungseinrichtungen zumindest mittelbar an den Führungen der Lehnen befestigbar sind und dass die Befestigungseinrichtungen jeweils einen Grundkörper aufweisen, an dem jeweils eine Anbindung für die Einrichtung vorgesehen ist. Hierdurch kann die Stabilität erhöht werden. Es kann eine höhere Belastbarkeit ermöglicht werden. Es können größere Einrichtungen stabil befestigt werden.

Vorteilhaft ist es, dass zumindest eine gegenüberliegende Sitzeinrichtung vorgesehen ist, die so gegenüberliegend zu der zumindest einen Sitzeinrichtung angeordnet ist, dass die Einrichtung zumindest teilweise zwischen der zumindest einen Sitzeinrichtung und der zumindest einen gegenüberliegenden Sitzeinrichtung befestigbar ist, dass die zumindest eine gegenüberliegende Sitzeinrichtung zumindest eine Lehne und zumindest eine Kopfstütze aufweist, wobei die Kopfstütze der gegenüberliegenden Sitzeinrichtung Stangen aufweist, die in Führungen der Lehne der gegenüberliegenden Sitzeinrichtung einführbar sind, wobei zumindest eine gegenüberliegende Befestigungseinrichtung vorgesehen ist, die zur Befestigung der Einrichtung an der gegenüberliegenden Sitzeinrichtung dient, dass die gegenüberliegende Befestigungseinrichtung zumindest mittelbar an den Führungen der Lehne der gegenüberliegenden Sitzeinrichtung befestigbar ist und dass die gegenüberliegende Befestigungseinrichtung einen Grundkörper aufweist, an dem eine Anbindung für die Einrichtung vorgesehen ist. Hierdurch kann eine hohe Stabilität gewährleistet werden. Es kann eine optimierte Platzausnutzung erzielt werden.

Vorteilhaft ist es, dass die gegenüberliegende Sitzeinrichtung als drehbare Sitzeinrichtung, insbesondere als Fahrersitz oder als Beifahrersitz, ausgebildet ist, und dass die gegenüberliegende Befestigungseinrichtung zur Befestigung der Einrichtung an der zu der Sitzeinrichtung gedrehten gegenüberliegenden Sitzeinrichtung dient. Hierdurch ist eine weitere Optimierung, insbesondere in Bezug auf die Stabilität und eine Platzausnutzung, möglich. Bei einer möglichen Ausgestaltung können der gedrehte Fahrersitz und der gedrehte Beifahrersitz als Sitzeinrichtung und gegenüberliegende Sitzeinrichtung genutzt werden. Bei einer anderen Ausgestaltung kann zumindest ein Sitz und/oder zumindest eine Sitzbank, die sich in Fahrtrichtung hinter dem Fahrersitz beziehungsweise dem Beifahrersitz befindet, zusammen mit dem Fahrersitz beziehungsweise dem Beifahrersitz genutzt werden.

Vorteilhaft ist es, dass die Einrichtung eine Liegefläche aufweist, dass eine Tischplatte vorgesehen ist, die zwischen einer Sitzfläche der Sitzeinrichtung und einer Sitzfläche der zu der Sitzeinrichtung gedrehten gegenüberliegenden Sitzeinrichtung anordenbar ist, und dass mittels der Sitzfläche der Sitzeinrichtung, der Tischplatte und der Sitzfläche der zu der Sitzeinrichtung gedrehten gegenüberliegenden Sitzeinrichtung eine weitere Liegefläche realisierbar ist, die unter der Einrichtung mit der Liegefläche angeordnet ist. Hierdurch kann insbesondere eine einem Stockbett entsprechende Anordnung realisiert werden. Dadurch ergibt sich eine weitere Optimierung, insbesondere bezüglich der Platzausnutzung.

Vorteilhaft ist es, dass die zumindest eine Sitzeinrichtung ein Isofix-System aufweist und/oder dass die zumindest eine gegenüberliegende Sitzeinrichtung ein Isofix-System aufweist und dass eine weitere Einrichtung, an der die weitere Liegefläche ausgebildet ist, mittels des Isofix-Systems der Sitzeinrichtung und/oder mittels des Isofix-Systems der gegenüberliegenden Sitzeinrichtung befestigbar ist, wobei die weitere Einrichtung auf der Sitzfläche der Sitzeinrichtung und auf der Sitzfläche der gegenüberliegenden Sitzeinrichtung und auf der Tischplatte abgestützt ist. Hierdurch kann eine weitere Optimierung, insbesondere in Bezug auf die Stabilität, erzielt werden.

Je nach Ausgestaltung und Anwendungsfall können ein oder mehrere der folgenden Vorteile und Merkmale realisiert sein.

Es kann eine Befestigung für Einrichtungen (Equipment), insbesondere für Zubehör und/oder Erweiterungen, in Fahrzeugen realisiert werden. Das Equipment kann in den Fahrzeugen sicher befestigt werden. Vorhandene geprüfte, zugelassene und/oder genormte Bauteile können mit einer weiteren Nutzung benutzt beziehungsweise verwendet werden.

Es kann eine Nutzung der vorhandenen, genormten Elemente beziehungsweise Bauteilen in einem Fahrzeug zur sicheren Befestigung von Equipment, insbesondere einem variablem Bettsystem, an der Kopfstützenbefestigung und zusätzlich an genormten Isofix-Systemen, falls diese vorhanden sind, erfolgen.

Das System besteht abhängig von der Last und der vorhanden Fahrzeugkonfiguration vorzugsweise aus mindestens einer Halterung beziehungsweise Aufhängung, welche in der genormten Aufnahme der Kopfstütze befestigt wird. Das System kann anstelle der Kopfstütze oder zwischen der Aufnahme und der Kopfstütze platziert werden.

Das System unterscheidet insbesondere zwei unterschiedliche Anbindungsarten, nämlich einerseits hängend und flexibel und somit vorzugsweise mit gurtähnlichen Zugmitteln beziehungsweise einem Gurt- und/oder Seilsystem und andererseits aufliegend und starr mit einem Bügel.

Das System kann von der Aufnahme der Kopfstützen nach unten oder nach oben geführt werden. Die Auflagefläche des Bügels bietet zudem eine Arretierung, welche der Verschiebung des zu befestigenden Equipments durch Formschluss entgegenwirkt. Zusätzlich lässt sich das System optional mittels einer Strebe oder einem Zurrsystem am genormten Isofix-System abstützen beziehungsweise abfangen. Hierdurch wird Last und/oder Bewegung absorbiert und reduziert.

Durch Nutzung von mehr als einer Kopfstützenarretierungen lässt sich die Traglast und auch die Größe der Liegefläche erhöhen beziehungsweise vergrößern. Bei Nutzung in Fahrzeugen mit Gegensitzgruppe beziehungsweise Dinette, einer Sitzkombination aus zwei gegenüberliegenden Sitzbänken mit dazwischenstehendem Tisch, kann zusätzlich eine obere Ebene und somit eine Art Stockbett generiert werden.

Der Abstand zwischen mindestens einer Kopfstützenarretierungen und einer weiteren Auflagefläche beschränkt ggf. die Länge der Liegefläche. Beispiel wird der Fahrer- und Beifahrersitz um 90° gedreht, wobei die Rückenlehne zu der jeweiligen Seitenscheibe zeigt. So entsteht im Zwischenraum der beiden Sitze ein Freiraum, in dem mittels der beschriebenen Halterungen an den beiden Kopfstützenarretierungen und durch ein Bett eine Liegefläche realisier. Verfügt der Beifahrersitz noch über ein Isofix System, dann kann eine Schlafstelle mit hoher Belastung generiert werden.

Das System, das auf der Lehne aufliegend oder starr mit Bügel ausgeführt werden kann, kann aus Metall, einer Metalllegierung, einem Verbundmaterial sowie entsprechende Kunststoffe bestehen. Je nach Material kann der Bügel noch über Ausklinkungen und Aussparungen, um weiterer Arretierung und/oder Formschluss zu generieren, verfügen. Ebenfalls sind diese Ausklinkungen und Aussparungen zur Gewichtsreduzierung möglich. Für ein System, bei dem eine hängende und flexible Anbindung gegeben ist, kann ein gurtähnliches beziehungsweise ein Gurt- und/oder Seil-System verwendet werden. Auch Systeme aus Stahlseilen oder Ketten sind denkbar.

Bei einer Ausgestaltung wird die Kopfstütze nicht entfernt, sondern das System wird an den Metallhalterungen der Kopfstützen angebunden. Dies kann passend für alle Arten von Sitzen und Sitzbänken in sämtlichen Fahrzeugen mit Kopfstützenaufnahmen realisiert sein. Fluchtwege in Fahrzeuge werden bei montiertem Equipment nicht beeinträchtigt oder blockiert. Je nach Anordnung der Sitze oder Bänke kann eine dazwischenliegende Fläche generiert werden. Ein System mit dem Isofix-System und Streben ist ebenfalls möglich.

Hierbei sind entsprechende Abwandlungen und Kombinationen der genannten Vorteile und Merkmale möglich.

Weitere Vorteile und Einzelheiten der Erfindung werden anhand der in den schematischen Figuren dargestellten Ausführungsbeispiele näher erläutert. Hierbei zeigen:
- Fig. 1: eine Sitzeinrichtung eines Freizeitfahrzeug mit einer Befestigungseinrichtung in einer auszugsweisen, schematischen, räumlichen Darstellung entsprechend einem Ausführungsbeispiel der Erfindung, wobei eine Ansicht auf eine Vorderseite und eine Seite einer Lehne der Sitzeinrichtung dargestellt ist;
- Fig. 2: eine auszugsweise Darstellung eines Freizeitfahrzeug mit der in Fig. 1 gezeigten Sitzeinrichtung, wobei ein Ausschnitt eines Innenraums des Freizeitfahrzeugs mit der Sitzeinrichtung und einer weiteren, gegenüberliegenden Sitzeinrichtung dargestellt ist;
- Fig. 3: das in Fig. 2 dargestellte Freizeitfahrzeug entsprechend einer abgewandelten Ausgestaltung;
- Fig. 4: eine auszugsweise, schematische, räumliche Darstellung eines Freizeitfahrzeugs entsprechend einer abgewandelten Ausgestaltung, wobei zur besseren Sichtbarmachung der Funktionsweise Teile der Sitzeinrichtung, insbesondere Polster an der Lehne, nicht dargestellt sind;
- Fig. 5: das in Fig. 3 dargestellte Freizeitfahrzeug entsprechend einer abgewandelten Ausgestaltung, wobei ein Anordnung entsprechend einem Stockbett realisiert ist;
- Fig. 6: eine auszugsweise, schematische, räumliche Darstellung eines Freizeitfahrzeugs entsprechend einem weiteren Ausführungsbeispiels in einem Zustand vor einer Montage von Befestigungseinrichtungen, wobei eine Ansicht auf eine Vorderseite und eine Seite der Lehne der Sitzeinrichtung gezeigt ist;
- Fig. 7: das in Fig. 6 dargestellte Freizeitfahrzeug vor einer Montage der Befestigungseinrichtungen;
- Fig. 8: das in Fig. 6 dargestellte Freizeitfahrzeug nach einer Montage der Befestigungseinrichtungen;
- Fig. 9: ein Detail des in Fig. 8 dargestellten Freizeitfahrzeugs, wobei zur besseren Sichtbarmachung Teile, insbesondere Polster der Lehne, der Sitzeinrichtung nicht dargestellt sind; und
- Fig. 10: ein Detail des in Fig. 7 dargestellten Freizeitfahrzeugs während der Montage, wobei zur besseren Sichtbarmachung Teile, insbesondere Polster der Lehne, der Sitzeinrichtung nicht dargestellt sind.

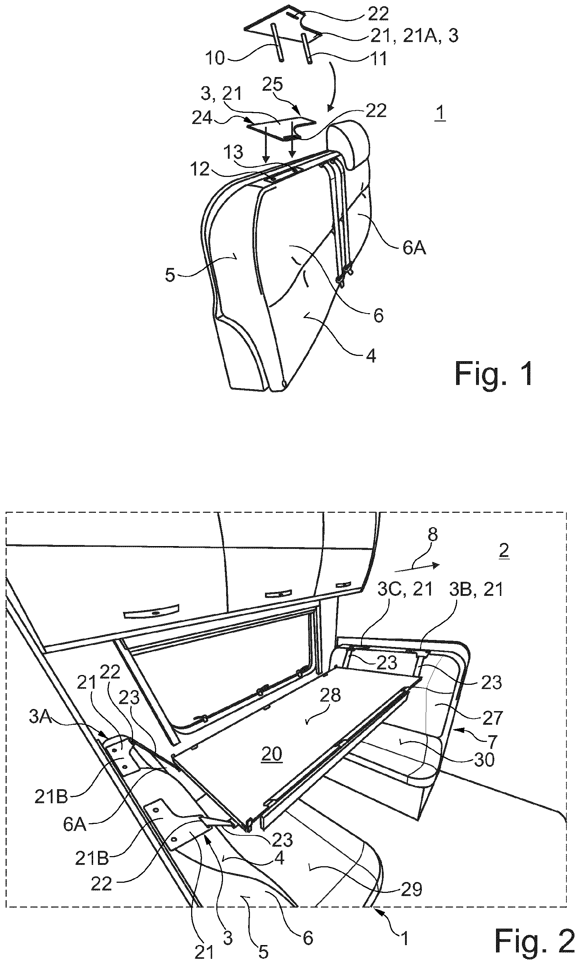

Fig. 1 zeigt eine Sitzeinrichtung 1 eines Freizeitfahrzeug 2 (Fig. 2) mit einer Befestigungseinrichtung 3 in einer auszugsweisen, schematischen, räumlichen Darstellung entsprechend einem Ausführungsbeispiel der Erfindung, wobei eine Ansicht auf eine Vorderseite 4 und eine Seite 5 einer Lehne 6 der Sitzeinrichtung 1 dargestellt ist. Das Freizeitfahrzeug 2 ist vorzugsweise als Wohnmobil ausgebildet. Das Freizeitfahrzeug 1 umfasst die Sitzeinrichtung 1 sowie eine weitere Sitzeinrichtung 7. Die Sitzeinrichtungen 1, 7 sind einander zugewandt.

Eine Sitzeinrichtung 7 kann bei einer abgewandelten Ausgestaltung auch im Frontbereich des Freizeitfahrzeugs 1 angeordnet sein. Bei einer Fahrt kann diese in einer Fahrstellung angeordnet sein, so dass diese in Fahrtrichtung 8 orientiert ist. Bei einem Aufenthalt, wenn das Freizeitfahrzeug 1 beispielsweise auf einem Campingplatz abgestellt ist, kann dann solch eine Sitzeinrichtung in einer oder mehreren Aufenthaltsstellungen angeordnet werden. Die Aufenthaltsstellungen unterscheiden sich von der Fahrstellung. Beispielsweise kann die Sitzeinrichtungen um 180° entgegen der Fahrtrichtung 8 orientiert werden, so dass sich dann eine Situation ergibt, die der Fig. 2 entspricht, wobei anstelle der Sitzeinrichtung 7 ein Fahrersitz genutzt wird. Die Sitzeinrichtung im Frontbereich ist hierfür als drehbare Sitzeinrichtung ausgebildet, wobei ausgehend von der Fahrstellung ein Drehen nach innen möglich ist. Hierbei kann eine Arretierung in beliebiger Drehstellung ermöglicht sein. Es kann auch ein Drehen eines Fahrersitzes um beispielsweise 90° erfolgen, wobei ein Beifahrersitz entgegengesetzt dazu um 90° gedreht wird, so dass dann der Fahrer- und Beifahrersitz einander zugewandt sind. Dadurch ist eine weitere Abwandlung möglich, bei der der Fahrer- und Beifahrersitz die Funktionen der Sitzeinrichtungen 1, 7 übernehmen können.

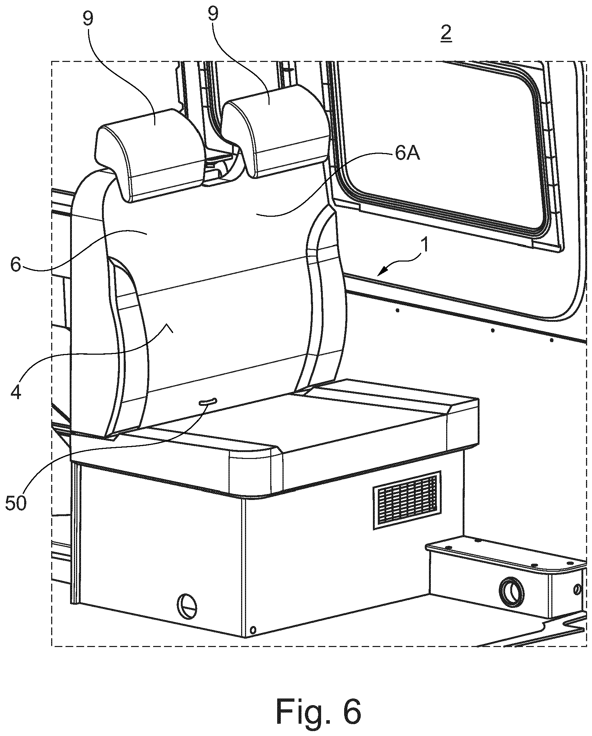

Die Sitzeinrichtung 1 weist eine Lehne 6 und eine Kopfstütze 9 (Fig. 6) auf. Die Kopfstütze 9 umfasst Stangen 10, 11, die in Führungen 12, 13 der Lehne 6 einführbar, aber entfernt beziehungsweise bei einer möglichen Ausgestaltung eingeführt sind. Ferner ist eine Befestigungseinrichtung 3 vorgesehen, die zur Befestigung einer Einrichtung 20 an der Sitzeinrichtung 1 dient. Die Befestigungseinrichtung 3 ist an den Führungen 12, 13 der Lehne 6 befestigt. Die Befestigungseinrichtung 3 weist einen Grundkörper 21 auf, an dem eine Anbindung 22 für die Einrichtung 20 vorgesehen ist.

Fig. 2 zeigt eine auszugsweise Darstellung des Freizeitfahrzeug 2 mit der in Fig. 1 gezeigten Sitzeinrichtung 1, wobei ein Ausschnitt eines Innenraums des Freizeitfahrzeugs 2 mit der Sitzeinrichtung 2 und einer weiteren, gegenüberliegenden Sitzeinrichtung 7 dargestellt ist. Die Anbindung 22 weist in diesem Ausführungsbeispiel ein Zugmittel 23 auf, über das die Einrichtung 20 an den Grundkörper 21 gehängt ist.

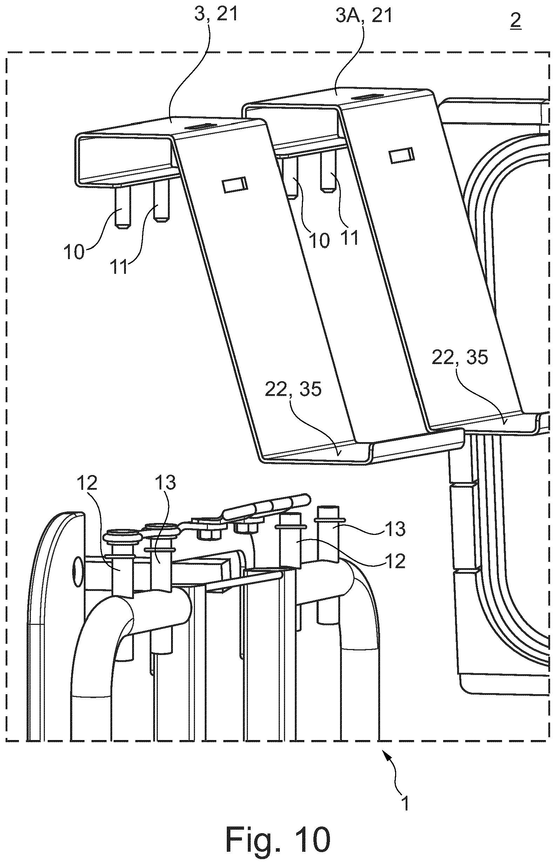

Der Grundkörper 21 weist Durchgangsöffnungen 24, 25 auf, durch die die Stangen 10, 11 der Kopfstütze 9 geführt sind. Der Grundkörper 21 ist dadurch bei dieser möglichen Ausgestaltung an den in die Führungen 12, 13 der Lehne 6 eingeführten Stangen 10, 11 der Kopfstütze 9 befestigt. Bei einer bevorzugten Ausgestaltung können auch von der Kopfstütze 9 unabhängiger Stangen 10, 11 in die Führungen 12, 13 der Lehne 6 eingefügt werden, wie es auch in Fig. 2 und 10 gezeigt ist. Denkbar sind auch einzelne Stangen 10, 11, die beispielsweise geeignete Köpfe aufweisen können, um dieses wieder einfach entfernen zu können.

In diesem Ausführungsbeispiel sind zwei Lehnen 6, 6A nebeneinander angeordnet. Ferner sind zwei sich entsprechende Befestigungseinrichtungen 3, 3A vorgesehen, die zur Befestigung der Einrichtung 20 an der Sitzeinrichtung 1 dienen. Die Befestigungseinrichtungen 3, 3A sind insbesondere auf einander entsprechende Weise an den Führungen 12, 13 der Lehnen 6, 6A befestigt. Außerdem weisen die Befestigungseinrichtungen 3, 3A jeweils einen Grundkörper 21 aufweisen, an dem jeweils eine Anbindung 22 für die Einrichtung 20 vorgesehen ist.

Außerdem ist in diesem Ausführungsbeispiel eine gegenüberliegende Sitzeinrichtung 7 vorgesehen. Die Einrichtung 20 ist zwischen der Sitzeinrichtung 1 und der gegenüberliegenden Sitzeinrichtung 7 angeordnet und an den Sitzeinrichtungen 1, 7 befestigt. Die gegenüberliegende Sitzeinrichtung 7 weist hierfür in entsprechender Weise eine Lehne 27 und eine Kopfstütze 9 auf. Die Kopfstütze 9 der gegenüberliegenden Sitzeinrichtung 7 ist entsprechend der Kopfstütze 9 der Sitzeinrichtung 1 ausgebildet und umfasst Stangen 10, 11, die in Führungen 12, 13 der Lehne 27 der gegenüberliegenden Sitzeinrichtung 7 eingeführt sind. In diesem Ausführungsbeispiel sind entsprechend zwei gegenüberliegende Befestigungseinrichtung 3B, 3C vorgesehen, die zur Befestigung der Einrichtung 20 an der gegenüberliegenden Sitzeinrichtung 7 dienen. Hierbei sind die gegenüberliegenden Befestigungseinrichtung 3B, 3C an Führungen 12, 13 der Lehnen 27 der gegenüberliegenden Sitzeinrichtung 7 befestigt. Die gegenüberliegenden Befestigungseinrichtungen 3B, 3C weisen einen Grundkörper 21 auf, an denen jeweils eine Anbindung 22 für die Einrichtung 20 vorgesehen ist. Somit ist eine Aufhängung der Einrichtung 20 über insgesamt vier Zugmittel 23 gegeben. Die Einrichtung 20 weist eine Liegefläche 28 auf. Durch die zuverlässige Befestigung kann diese für ein Bett dienen.

Die gegenüberliegende Sitzeinrichtung 7 kann bei einer abgewandelten Ausgestaltung als drehbare Sitzeinrichtung 7, insbesondere als Fahrersitz oder als Beifahrersitz, ausgebildet sein. Hierbei können je nach Ausgestaltung ein oder mehrere gegenüberliegende Befestigungseinrichtung 3B, 3C zur Befestigung der Einrichtung 20 an der zu der Sitzeinrichtung 1 gedrehten gegenüberliegenden Sitzeinrichtung 7 dienen.

Fig. 1 zeigt außerdem eine abgewandelte Ausgestaltung 21A, bei der die von der Kopfstütze 9 unabhängigen Stangen 10, 11 mit dem Grundkörper 21 verbunden sind, wobei die Stangen 10, 11 in die Führungen 12, 13 der Lehne 6 einführbar sind. Ferner kann, wie in Fig. 2 gezeigt ist, eine Platte (Bügel) 21B vorgesehen sein, an der die Stangen 10, 11 befestigt sind. Es können auch zwei Grundkörper 21, 21A zum Einsatz kommen.

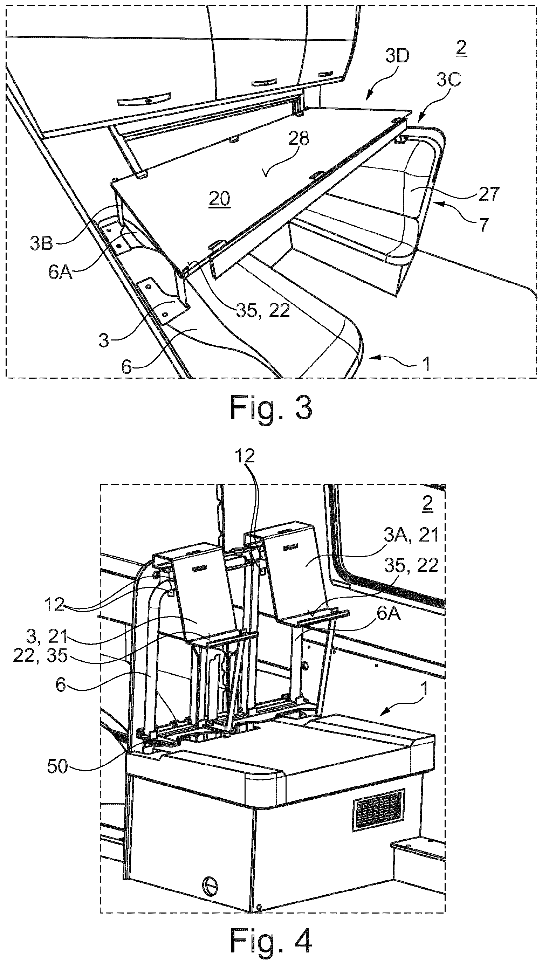

Fig. 3 zeigt das in Fig. 2 dargestellte Freizeitfahrzeug 2 entsprechend einer abgewandelten Ausgestaltung. Die Anbindung 22 weist hierbei eine an dem Grundkörper 21 ausgestaltete Stützfläche 40 auf, an der die Einrichtung 20 abstützbar ist. Fig. 4 zeigt ebenfalls eine auszugsweise, schematische, räumliche Darstellung eines Freizeitfahrzeugs 2, bei der eine Stützfläche 35 an dem Grundkörper 21 zur Anbindung vorgesehen ist, entsprechend einer abgewandelten Ausgestaltung, wobei zur besseren Sichtbarmachung der Funktionsweise Teile der Sitzeinrichtung 1, insbesondere Polster an den Lehnen 6, 6A nicht dargestellt sind.

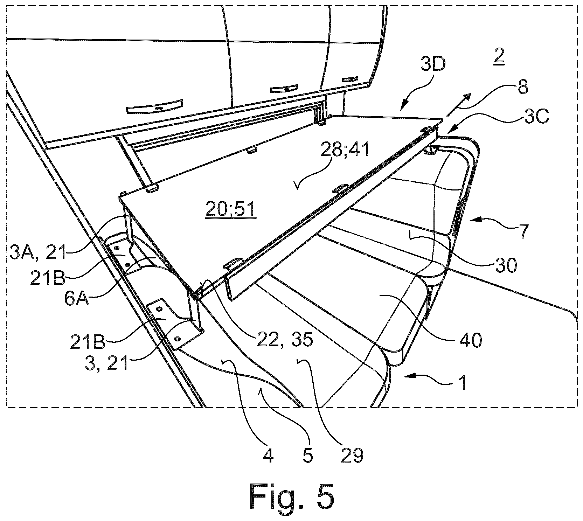

Fig. 5 zeigt das in Fig. 3 dargestellte Freizeitfahrzeug 2 entsprechend einer abgewandelten Ausgestaltung, wobei ein Anordnung entsprechend einem Stockbett realisiert ist. Hierfür ist eine Tischplatte 40 vorgesehen, die zwischen einer Sitzfläche 29 der Sitzeinrichtung 1 und einer Sitzfläche 30 der zu der Sitzeinrichtung 1 gegenüberliegenden Sitzeinrichtung 7 angeordnet ist. Mittels der Sitzfläche 29 der Sitzeinrichtung 1, der Tischplatte 40 und der Sitzfläche 30 der zu der Sitzeinrichtung 1 gegenüberliegenden Sitzeinrichtung 7 ist eine weitere Liegefläche 41 realisierbar, die unter der Einrichtung 20 mit der Liegefläche 28 angeordnet ist.

Die Sitzeinrichtung 1 weist ein Isofix-System 50 auf. Entsprechend weist die die gegenüberliegende Sitzeinrichtung 7 ein Isofix-System 50 auf. Eine der Einrichtung 20 entsprechende weitere Einrichtung 51 kann unter der Einrichtung 20 angeordnet werden. An der weiteren Einrichtung 51 ist dann die weitere Liegefläche 41 vorgesehen. Hierbei kann mittels des Isofix-Systems 50 der Sitzeinrichtung 1 und des Isofix-Systems 50 der gegenüberliegenden Sitzeinrichtung 7 eine zuverlässige Befestigung der weiteren Einrichtung an den Sitzeinrichtungen 1, 7 erfolgen. Die weitere Einrichtung 51 ist dann auf der Sitzfläche 29 der Sitzeinrichtung 1 und auf der Sitzfläche 30 der gegenüberliegenden Sitzeinrichtung 7 sowie auf der Tischplatte 40 abgestützt.

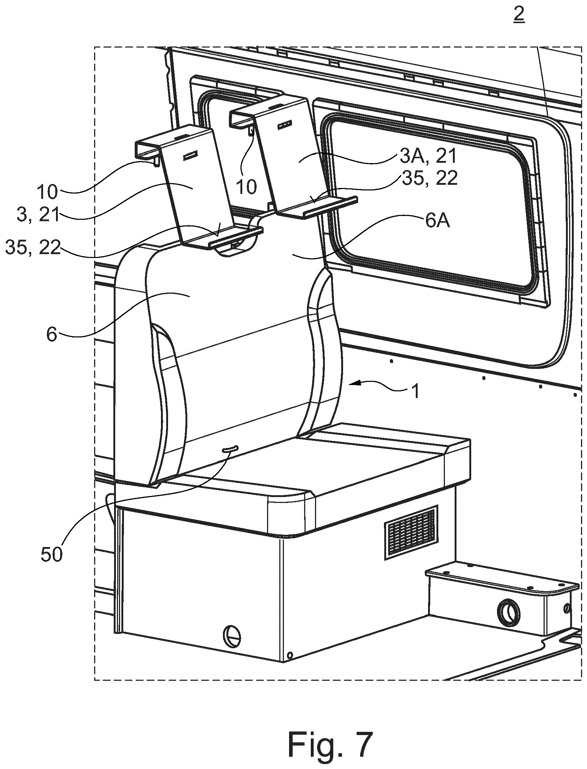

Fig. 6 zeigt eine auszugsweise, schematische, räumliche Darstellung eines Freizeitfahrzeugs 2 entsprechend einem weiteren Ausführungsbeispiels in einem Zustand vor einer Montage von Befestigungseinrichtungen 3, 3A, wobei eine Ansicht auf eine Vorderseite 4 und eine Seite 5 der Lehne 6, 6A der Sitzeinrichtung 1 gezeigt ist. Fig. 7 zeigt das in Fig. 6 dargestellte Freizeitfahrzeug 2 vor einer Montage der Befestigungseinrichtungen 3, 3A. Hierbei können die Stangen 10, 11 mit den Grundkörpern 21 verbunden sein.

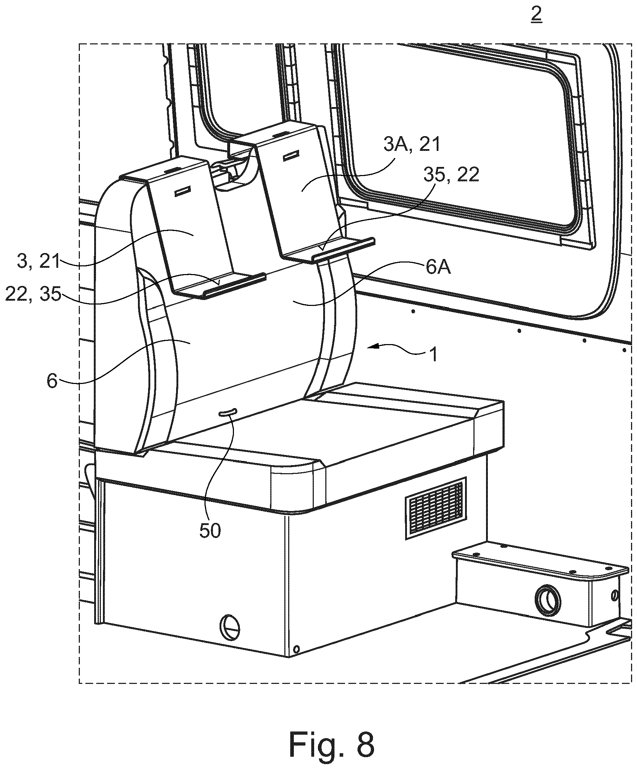

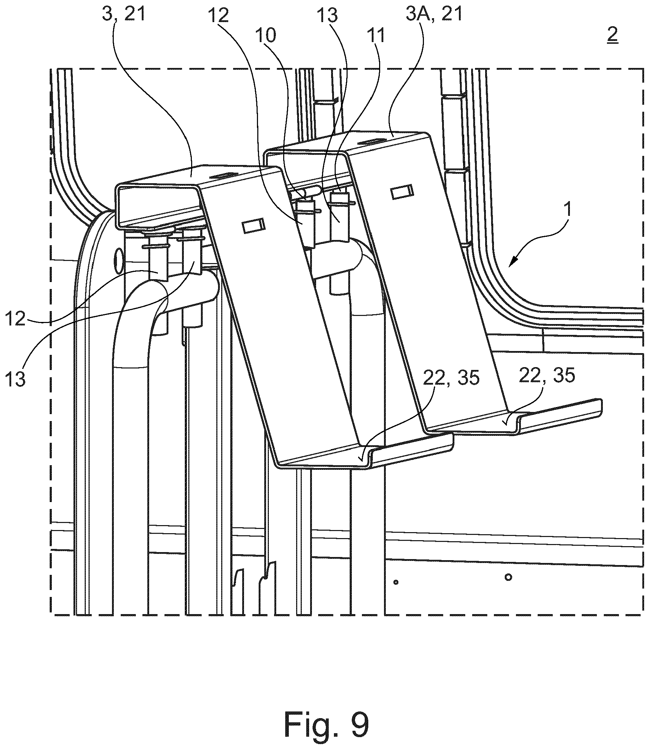

Fig. 8 zeigt das in Fig. 6 dargestellte Freizeitfahrzeug 2 nach einer Montage der Befestigungseinrichtungen 3, 3A. Fig. 9 zeigt ein Detail des in Fig. 8 dargestellten Freizeitfahrzeugs 2, wobei zur besseren Sichtbarmachung Teile, insbesondere Polster der Lehnen 6, 6A, der Sitzeinrichtung 1 nicht dargestellt sind. Fig. 10 zeigt ein Detail des in Fig. 7 dargestellten Freizeitfahrzeugs 2 während der Montage, wobei zur besseren Sichtbarmachung Teile, insbesondere Polster der Lehnen 6, 6A, der Sitzeinrichtung 1 nicht dargestellt sind.

Die Erfindung ist nicht auf die beschriebenen Ausführungsbeispiele beschränkt.

## Patentansprüche

1. Freizeitfahrzeug (2), insbesondere Wohnmobil, mit zumindest einer Sitzeinrichtung (1), wobei die zumindest eine Sitzeinrichtung (1) zumindest eine Lehne (6) und zumindest eine Kopfstütze (9) aufweist, wobei die Kopfstütze (9) Stangen (10, 11) aufweist, die in Führungen (12, 13) der Lehne (6) einführbar sind,
**dadurch gekennzeichnet,**
**dass** zumindest eine Befestigungseinrichtung (3) vorgesehen ist, die zur Befestigung einer Einrichtung (20) an der Sitzeinrichtung (1) dient, dass die Befestigungseinrichtung (3) zumindest mittelbar an den Führungen (12, 13) der Lehne (6) befestigbar ist und dass die Befestigungseinrichtung (3) einen Grundkörper (21) aufweist, an dem eine Anbindung (22) für die Einrichtung (20) vorgesehen ist.

2. Freizeitfahrzeug nach Anspruch 1,
**dadurch gekennzeichnet,**
**dass** die Anbindung (22) zumindest ein Zugmittel (23) aufweist, wobei die Einrichtung (20) mittels des zumindest einen Zugmittels (23) an den Grundkörper (21) hängbar ist.

3. Freizeitfahrzeug nach Anspruch 1 oder 2,
**dadurch gekennzeichnet,**
**dass** die Anbindung (22) zumindest eine an dem Grundkörper (21) ausgestaltete Stützfläche (40) aufweist, an der die Einrichtung (20) abstützbar ist.

4. Freizeitfahrzeug nach einem der Ansprüche 1 bis 3,
**dadurch gekennzeichnet,**
**dass** der Grundkörper (21) Durchgangsöffnungen (24, 25) aufweist, durch die die Stangen (10, 11) der Kopfstütze (9) führbar sind, und dass im montierten Zustand der Befestigungseinrichtung (3) der Grundkörper (21) mittels der in die Führungen (12, 13) der Lehne (6) eingeführten Stangen (10, 11) der Kopfstütze (9) oder von der Kopfstütze (9) unabhängiger Stangen (10, 11) an den Führungen (12, 13) der Lehne (6) befestigt ist.

5. Freizeitfahrzeug nach Anspruch 4,
**dadurch gekennzeichnet,**
**dass** die von der Kopfstütze (9) unabhängigen Stangen (10, 11) mit dem Grundkörper (21) verbunden sind, wobei die Stangen (10, 11) in die Führungen (12, 13) der Lehne (6) einführbar sind.

6. Freizeitfahrzeug nach einem der Ansprüche 1 bis 5,
**dadurch gekennzeichnet,**
**dass** zumindest zwei Lehnen (6, 6A) nebeneinander angeordnet sind und dass zumindest zwei Befestigungseinrichtungen (3, 3A) vorgesehen sind, die zur Befestigung der Einrichtung (20) an der Sitzeinrichtung (1) dienen, dass die Befestigungseinrichtungen (3, 3A) zumindest mittelbar an den Führungen (12, 13) der Lehnen (6, 6A) befestigbar sind und dass die Befestigungseinrichtungen (3, 3A) jeweils einen Grundkörper (21) aufweisen, an dem jeweils eine Anbindung (22) für die Einrichtung (20) vorgesehen ist.

7. Freizeitfahrzeug nach einem der Ansprüche 1 bis 6,
**dadurch gekennzeichnet,**
**dass** zumindest eine gegenüberliegende Sitzeinrichtung (7) vorgesehen ist, die so gegenüberliegend zu der zumindest einen Sitzeinrichtung (1) angeordnet ist, dass die Einrichtung (20) zumindest teilweise zwischen der zumindest einen Sitzeinrichtung (1) und der zumindest einen gegenüberliegenden Sitzeinrichtung (7) befestigbar ist, dass die zumindest eine gegenüberliegende Sitzeinrichtung (7) zumindest eine Lehne (27) und zumindest eine Kopfstütze (9) aufweist, wobei die Kopfstütze (9) der gegenüberliegenden Sitzeinrichtung (7) Stangen (10, 11) aufweist, die in Führungen (12, 13) der Lehne (27) der gegenüberliegenden Sitzeinrichtung (7) einführbar sind, wobei zumindest eine gegenüberliegende Befestigungseinrichtung (3B, 3C) vorgesehen ist, die zur Befestigung der Einrichtung (20) an der gegenüberliegenden Sitzeinrichtung (7) dient, dass die gegenüberliegende Befestigungseinrichtung (3B, 3C) zumindest mittelbar an den Führungen (12, 13) der Lehne (27) der gegenüberliegenden Sitzeinrichtung (7) befestigbar ist und dass die gegenüberliegende Befestigungseinrichtung (3B, 3C) einen Grundkörper (21) aufweist, an dem eine Anbindung (22) für die Einrichtung (20) vorgesehen ist.

8. Freizeitfahrzeug nach Anspruch 7,
**dadurch gekennzeichnet,**
**dass** die gegenüberliegende Sitzeinrichtung (7) als drehbare Sitzeinrichtung (7), insbesondere als Fahrersitz oder als Beifahrersitz, ausgebildet ist, und dass die gegenüberliegende Befestigungseinrichtung (3B, 3C) zur Befestigung der Einrichtung (20) an der zu der Sitzeinrichtung (1) gedrehten gegenüberliegenden Sitzeinrichtung (7) dient.

9. Freizeitfahrzeug nach Anspruch 8,
**dadurch gekennzeichnet,**
**dass** die Einrichtung (20) eine Liegefläche (28) aufweist, dass eine Tischplatte (40) vorgesehen ist, die zwischen einer Sitzfläche (29) der Sitzeinrichtung (1) und einer Sitzfläche (30) der zu der Sitzeinrichtung (1) gedrehten gegenüberliegenden Sitzeinrichtung (7) anordenbar ist, und dass mittels der Sitzfläche (29) der Sitzeinrichtung (1), der Tischplatte (40) und der Sitzfläche (30) der zu der Sitzeinrichtung (1) gedrehten gegenüberliegenden Sitzeinrichtung (7) eine weitere Liegefläche (41) realisierbar ist, die unter der Einrichtung (20) mit der Liegefläche (28) angeordnet ist.

10. Freizeitfahrzeug nach Anspruch 9,
**dadurch gekennzeichnet,**
a) **dass** die zumindest eine Sitzeinrichtung (1) ein Isofix-System (50) aufweist und/oder dass die zumindest eine gegenüberliegende Sitzeinrichtung (7) ein Isofix-System (50) aufweist und
b) **dass** eine weitere Einrichtung (51), an der die weitere Liegefläche (41) ausgebildet ist, mittels des Isofix-Systems (50) der Sitzeinrichtung (1) und/oder mittels des Isofix-Systems (50) der gegenüberliegenden Sitzeinrichtung (7) befestigbar ist, wobei die weitere Einrichtung (51) auf der Sitzfläche (29) der Sitzeinrichtung (1) und auf der Sitzfläche (30) der gegenüberliegenden Sitzeinrichtung (7) und auf der Tischplatte (40) abgestützt ist.
